(19) Europäisches Patentamt
European Patent Office
Office européen des brevets

(11) EP 4 704 393 A1

(12) EUROPEAN PATENT APPLICATION

(43) Date of publication:
04.03.2026 Bulletin 2026/10

(21) Application number: 25196750.1

(22) Date of filing: 19.08.2025

(51) International Patent Classification (IPC):
H04L 43/0894 (2022.01)   H04L 43/16 (2022.01)
H04L 43/50 (2022.01)   H04L 47/10 (2022.01)

(52) Cooperative Patent Classification (CPC):
H04L 43/50; H04L 43/0894; H04L 43/16;
H04L 47/18

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 29.08.2024   CN 202411195421

(71) Applicant: Airoha Technology (Suzhou) Limited
Suzhou City Jiangsu 215021 (CN)

(72) Inventors:
• HUANG, Weihua
  Nanjing City, 210037 (CN)
• YAN, Fei
  Nanjing City, 210037 (CN)
• HU, Lidong
  Nanjing City, 210037 (CN)

(74) Representative: Hoefer & Partner Patentanwälte
mbB
Pilgersheimer Straße 20
81543 München (DE)

(54) **UPLOAD SPEED TEST METHOD AND UPLOAD SPEED TEST DEVICE**

(57) An upload speed test method includes: during an upload speed test process, repeatedly checking (S204, S206, S222) whether at least one sending rate adjustment condition (S208, S210, S214) is met; and whenever it is determined that the at least one sending rate adjustment condition is met, adjusting a current sending rate to set an adjusted sending rate (S212, S216), and using the adjusted sending rate to transmit packets to a server.

FIG. 2

**Description**

BACKGROUND OF THE INVENTION

1. FIELD OF THE INVENTION

The present invention relates to a network speed test, and more particularly, to an upload (also called uplink) speed test method that is based on dynamic rate adjustment and an upload speed test device using the upload speed test method.

2. DESCRIPTION OF THE PRIOR ART

Transmission Control Protocol (TCP) is a protocol belonging to the transport layer, and is also an end-to-end transmission protocol (also known as a Host-to-Host or Process-to-Process transmission protocol). In other words, the computers at both ends of the TCP connection can communicate with each other to ensure the integrity of data being transmitted therebetween and control the sending rate. These actions only involve communications between two computers, and are completely independent of any intermediate nodes, such as routers or switches. TCP uses two mechanisms, including acknowledgment and retransmission, to ensure the integrity and the reliability of TCP packets transmitted over the network. As a result, the overall transmission process may be less efficient, but it can guarantee that TCP packets are transmitted correctly and reliably from a sender to a receiver. However, for certain applications, such characteristics may cause a negative impact. For example, regarding network speed test applications, an Optical Network Unit (ONU) can run a HyperText Transfer Protocol (HTTP) client to access an HTTP server on the Internet for speed test. Since HTTP belongs to the application layer, subsequent data transmission is handled by TCP at the transport layer to ensure that data is delivered to the destination correctly. When the receiver detects packet loss, it continuously transmits three duplicate acknowledgment (ACK) packets to request the sender to retransmit the TCP packet. Additionally, when network latency increases (i.e., the time difference between the sender sending a TCP packet and receiving an acknowledgment packet from the receiver (also known as Round Trip Time (RTT)) is larger), the TCP packet loss rate will increase, and the efficiency of packet exchange between the sender and the receiver will be reduced at the same time.

Since the transmission of TCP packets from the sender is driven by the acknowledgment packets returned from the receiver, when the performance of an upload speed test is affected by packet loss and network latency, the upload speed test is unable to accurately measure the network's maximum bandwidth. How to reduce the impact of network latency and packet loss on the upload speed test for enabling the upload speed test to get more accurate measurement of the network's maximum bandwidth has become an urgent issue to be addressed.

SUMMARY OF THE INVENTION

One of the objectives of the claimed invention is to provide an upload speed test method that is based on dynamic rate adjustment and an upload speed test device using the upload speed test method. An upload speed test method and an upload speed test device according to the invention are defined in the independent claims. The dependent claims define preferred embodiments thereof.

According to a first aspect of the present invention, an exemplary upload speed test method is disclosed. The exemplary upload speed test method includes: during an upload speed test process, repeatedly checking whether at least one sending rate adjustment condition is met; and whenever it is determined that the at least one sending rate adjustment condition is met, adjusting a current sending rate to set an adjusted sending rate, and using the adjusted sending rate to transmit packets to a server.

According to a second aspect of the present invention, an exemplary upload speed test device is disclosed. The exemplary upload speed test device includes a network interface circuit, a storage device, and a processor. The network interface circuit is arranged to transmit packets to a server for upload speed test. The storage device is arranged to store a program code. The processor is arranged to load and execute the program code to perform following operations: during an upload speed test process, repeatedly checking whether at least one sending rate adjustment condition is met, and whenever it is determined that the at least one sending rate adjustment condition is met, adjusting a current sending rate to set an adjusted sending rate, and instruct the network interface circuit to use the adjusted sending rate to transmit packets to the server.

These and other objectives of the present invention will no doubt become obvious to those of ordinary skill in the art after reading the following detailed description of the preferred embodiment that is illustrated in the various figures and drawings.

BRIEF DESCRIPTION OF THE DRAWINGS

FIG. 1 is a diagram illustrating a network system according to an embodiment of the present invention.
FIG. 2 is a flowchart of an upload speed test method according to an embodiment of the present invention.
FIG. 3 is a flowchart of a processing method of an acknowledgement frame returned from a computer device (e.g., HTTP server) according to the embodiment of the present invention.

FIG. 4 is a diagram illustrating packer transmission between one computer device (e.g., ONU) and another computer device (e.g., HTTP server) that is affected by network latency according to an embodiment of the present invention.

FIG. 5 is a flowchart of a sending rate adjustment method according to an embodiment of the present invention.

DETAILED DESCRIPTION

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

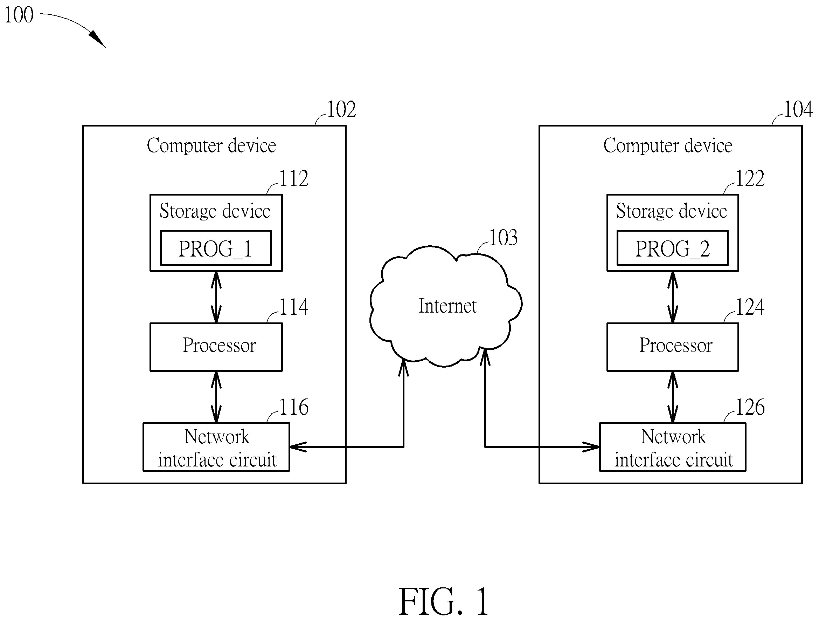

FIG. 1 is a schematic diagram illustrating a network system according to an embodiment of the present invention. The network system 100 includes a plurality of network devices (e.g., computer devices 102 and 104). Computer devices 102 and 104 can exchange data via the Internet 103. For example, the computer device 102 may serve as a client device, and the computer device 104 may act as a server. In this embodiment, the computer device 102 may be an Optical Network Unit (ONU), and may include a storage device 112, a processor 114, and a network interface circuit 116. It should be noted that only the components pertinent to the present invention are illustrated in FIG. 1. In practice, the computer device 102 may include additional components to achieve other functions. The storage device 112 may be a memory or any component with data storage capability, and may be used to store a program code PROG_1. For example, the program code PROG_1 may include codes of an operating system (OS) and code of an application (e.g., a network speed test software (client)). The processor 114 may be used to load and execute the program code PROG_1 to control operations of the computer device 102. For example, operations of the upload speed test method of the present invention that are related to the computer device 102 may be implemented by the processor 114 executing the program code PROG_1. The network interface circuit 116 includes hardware of a transmitter circuit and a receiver circuit, and may be used for accessing the Internet 103. For example, the computer device 102 may connect to the Internet 103 through a network provided by a network operator. When the upload speed test method of the present invention is in operation, the computer device (e.g., ONU) 102 may serve as an upload speed test device. Therefore, the processor 114 instructs the network interface circuit 116 to send TCP packets (hereinafter referred to as packets) to the computer device (e.g., HTTP server) 104 for the upload speed test.

The computer device 104 may include a storage device 122, a processor 124, and a network interface circuit 126. It should be noted that only the components pertinent to the present invention are illustrated in FIG. 1. In practice, the computer device 104 may include additional components to achieve other functions. The storage device 122 may be a memory or any component with data storage capability, and may be used to store a program code PROG_2. For example, the program code PROG_2 may include codes of an operating system and codes of an application (e.g., network speed test software (server)). The processor 124 may be used to load and execute the program code PROG_2 to control operations of the computer device 104. The network interface circuit 126 includes hardware of a transmitter circuit and a receiver circuit, and may be used for accessing the Internet 103. For example, the computer device 104 can connect to the Internet 103 through a network provided by a network operator. When the computer device (e.g., HTTP server) 104 detects packet loss, the processor 124 instructs the network interface circuit 126 to continuously send three duplicate acknowledgment packets to the computer device (e.g., ONU) 102 to request packet retransmission.

The upload speed test method of the present invention leverages acknowledgment packets of the TCP protocol and a packet retransmission mechanism that is based on duplicate acknowledgment packets to dynamically adjust a sending rate in order to assess the network's maximum upload speed. Therefore, during an upload speed test process, the sending rate will undergo acceleration when no packet loss occurs and deceleration when packet loss occurs, and will ultimately converge to the maximum sending rate (i.e., the upload speed test result) under a condition of no packet loss. The operational details of the upload speed test method of the present invention will be described as below with reference to the accompanying drawings.

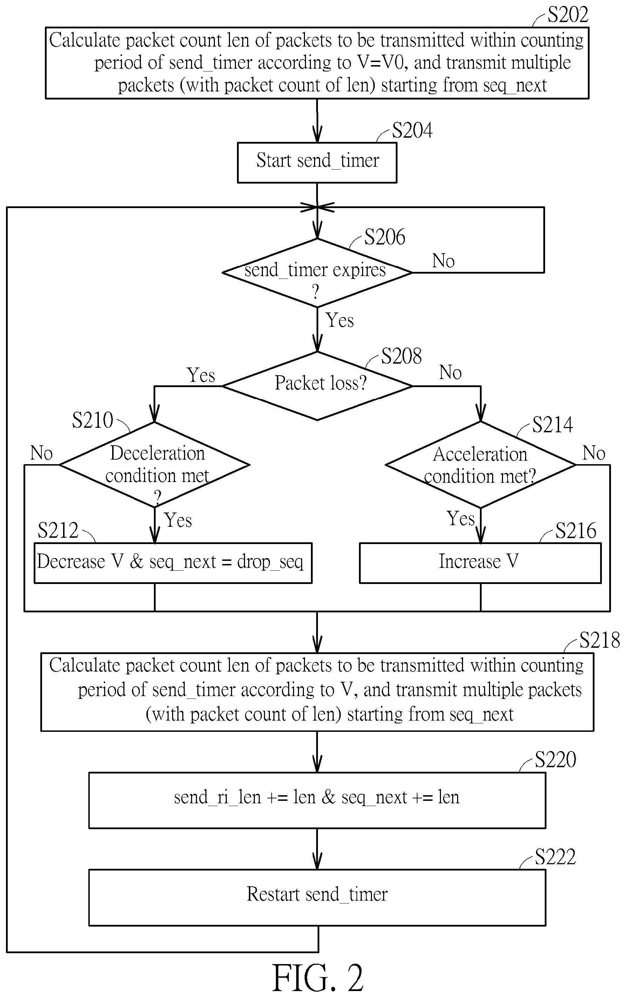

FIG. 2 is a flowchart of an upload speed test method according to an embodiment of the present invention. The upload speed test method may be implemented by the processor 114 of the computer device (e.g., an ONU with upload speed test functionality) 102 shown in FIG. 1 that loads and executes the program code PROG_1. Provided that the result is substantially the same, the steps are not required to be executed in the exact order shown in FIG. 2. In step S202, the processor 114 initializes the sending rate V (V = V0), refers to the current sending rate V (V = V0) to calculate a packet count len of packets to be transmitted within a timing period (e.g., 1 millisecond (ms)) of a timer send_timer, and instructs the network interface circuit 116 to begin transmitting multiple packets (with a packet count of len) starting from the sequence number seq_next of the next packet (e.g., an initial value of seq_next is a sequence number of the first packet transmitted during the upload speed test). In step S204, the processor 114 starts the timer send_timer. In this embodiment, the timing period (e.g., 1 ms) of the timer send_timer determines the timing when it is necessary to determine whether the current sending rate V needs to be adjusted (e.g., increased or decreased).

Furthermore, during the process of sending multiple packets (with a packet count of len), starting from the sequence number seq_next of the next packet, through the network interface circuit 116, the network interface circuit 116 receives acknowledgment packet(s) from the computer device 104. If no packet loss occurs between the computer device (e.g., ONU) 102 and the computer device (e.g., HTTP server) 104, the processor 114 updates the sequence number seq_next of the next packet according to an acknowledgment packet. That is, an ACK number carried by the acknowledgment packet represents the sequence number of the next packet that the computer device (e.g., HTTP server) 104 expects to receive. Therefore, the sequence number seq_next of the next packet to be transmitted is updated based on the ACK number carried by the acknowledgment packet. However, if packet loss occurs between the computer device (e.g., ONU) 102 and the computer device (e.g., HTTP server) 104, the computer device 104 continuously transmits three duplicate acknowledgment packets to request packet retransmission.

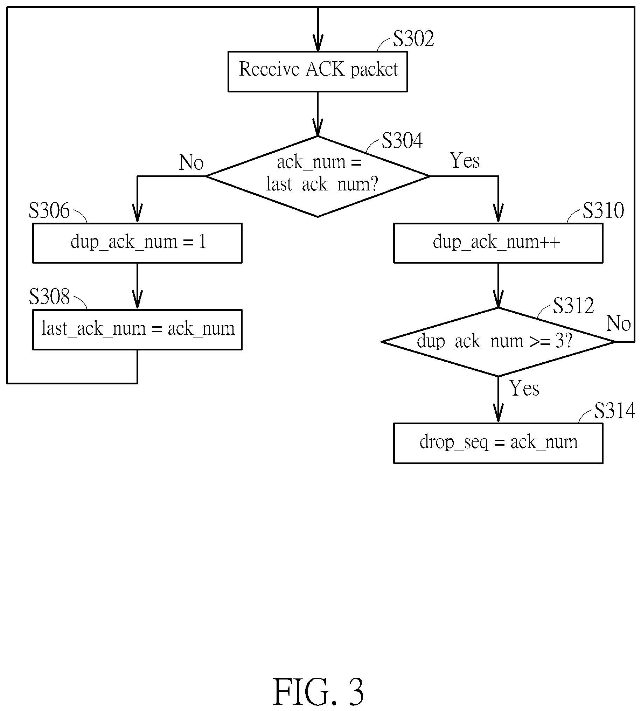

FIG. 3 is a flowchart of a processing method of an acknowledgement frame returned from a computer device (e.g., HTTP server) 104 according to the embodiment of the present invention. Provided that the result is substantially the same, the steps are not required to be executed in the exact order shown in FIG. 3. In step S302, the processor 114 receives an acknowledgment packet (which carries an ACK number indicating the sequence number of the next packet) returned from the computer device 104 through the network interface circuit 116. In step S304, the processor 114 determines whether the ACK number ack_num of the current acknowledgment packet is the same as the ACK number last_ack_num of the previous acknowledgment packet. If the ACK number ack_num of the current acknowledgment packet is different from the ACK number last_ack_num of the previous acknowledgment packet (i.e., **ack_num ≠ last_ack_num**), this indicates that the computer device 104 does not detect any packet loss at this moment. Therefore, in step S306, the processor 114 resets the duplicate acknowledgment packet count dup_ack_num to 1 (i.e., dup_ack_num = 1). Additionally, in step S308, the processor 114 updates the ACK number last_ack_num of the previous acknowledgment packet to the ACK number ack_num of the current acknowledgment packet (i.e., last_ack_num = ack_num). The process then returns to step S302.

If the processor 114 determines that the ACK number ack_num of the current acknowledgment packet is the same as the ACK number last_ack_num of the previous acknowledgment packet (i.e., ack_num = last_ack_num) (step S304), the processor 114 increases the duplicate acknowledgment packet count dup_ack_num by 1 (i.e., dup_ack_num = dup_ack_num + 1) (step S310). In step S312, the processor 114 determines whether the computer device 104 has consecutively sent three duplicate acknowledgment packets to request packet retransmission. If the duplicate acknowledgment packet count dup_ack_num is not less than 3, the processor 114 sets the sequence number drop_seq of the lost packet by the current ACK number ack_num (i.e., drop_seq = ack_num) (step S314). If the processor 114 determines that the duplicate acknowledgment packet count dup_ack_num is still less than 3 (step S312), the process returns to step S302.

As mentioned above, the timing period (e.g., 1 ms) of the timer send_timer determines the timing when it is necessary to determine whether the current sending rate V needs to be adjusted (e.g., increased or decreased). In step S206, the processor 114 determines whether the timer send_timer has expired (i.e., whether the timer send_timer has completed the timing of one timing period). If the timer send_timer has expired, the processor 114 executes subsequent steps to decide whether to adjust (e.g., increase or decrease) the current sending rate V.

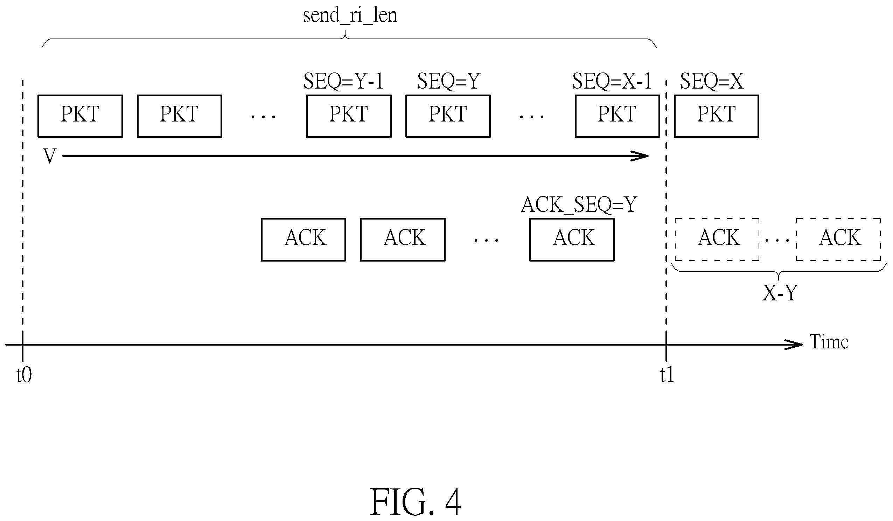

In step S208, the processor 114 determines whether packet loss has been detected. For example, the processor 114 may determine whether packet loss has occurred through step 312 shown in FIG. 3. If the processor 114 determines that packet loss is not detected yet (step S208), the processor 114 may further determine whether it is necessary to increase the current sending rate V. For example, during each timing period of the timer send_timer, the processor 114 of the computer device 102 instructs the network interface circuit 116 to use the current sending rate V to send multiple packets to the computer device 104 and immediately record the number of packets send_ri_len already transmitted at the current sending rate V. Therefore, if no packet loss is currently detected, the processor 114 can compare the sequence number seq_next of the next packet to be transmitted with the ACK number ack_num of the currently acknowledged packet to determine the number of packets unacknowledged by the computer device 104 (i.e., seq_next - ack_num). As shown in FIG. 4, the computer device 102 begins transmitting multiple packets PKT at the current sending rate V, starting from a time point t0 which is also a start time of the timer send_timer. Assuming that, during the time interval from t0 to t1, the current sending rate V is not adjusted due to any sending rate adjustment condition being met. In other words, the most recent adjustment of the sending rate occurred at the time point t0, and the sending rate remains unchanged thereafter. When the timer send_timer expires at time point t1, the sequence number of the most recently transmitted packet is X-1, and the sequence number of the next packet to be transmitted is X (i.e., seq_next = X). Additionally, the number of packets already transmitted at the current sending rate V is send_ri_len. When the computer device 104 receives a packet PKT, it transmits an acknowledgement packet ACK back to the computer device 102. For example, when the computer device 104 receives a packet PKT with a sequence number SEQ=Y-1, it transmits an acknowledgement packet ACK with an ACK number ACK_SEQ=Y. Assuming that, due to network latency, the most recently received acknowledgement packet ACK carries an ACK number Y (i.e., ack_num = Y) . As shown in FIG. 4, the number of packets unacknowledged by the computer device 104 is (X-1)-(Y-1) = X-Y = seq_next-ack_num. Therefore, the number of packets unacknowledged by the computer device 104 can be simply determined by calculating seq_next-ack_num.

If the ratio of the number of packets unacknowledged by the computer device 104 (i.e., seq_next-ack_num) to the number of packets already transmitted at the current sending rate V (i.e., send_ri_len) is smaller than a predetermined threshold TH1, the processor 114 can predict that the network is currently uncongested at the sending rate V, and the packets unacknowledged by the computer device 104 are primarily caused by transmission latency. At this moment, the processor 114 can further probe the network's maximum capacity through increasing the sending rate. Therefore, in step S214, the processor 114 checks whether an acceleration condition is met. For example, the processor 114 determines whether the ratio of the number of packets unacknowledged by the computer device 104 (i.e., seq_next-ack_num) to the number of packets already transmitted at the current sending rate V (i.e., send_ri_len)is below the predetermined threshold TH1 (i.e., the acceleration condition is $\frac{\text{seq\_next} - \text{ack\_num}}{\text{send\_ri\_len}} < \text{TH1}$). If the current packet transmission status meets the acceleration condition (i.e., the ratio is below the predetermined threshold TH1), the processor 114 updates the current sending rate V to a larger value (step S216).

If the processor 114 determines that packet loss has been detected (step S208), the processor 114 may further determine whether it is necessary to decrease the current sending rate V. For example, when the processor 114 receives three consecutive duplicate acknowledgment packets from the computer device 104 through the network interface circuit 116, the processor 114 determines that packet loss has occurred during the upload speed test process, and records the sequence number drop_seq of the lost packet (steps S312 and S314). However, the upload speed test method of the present invention does not immediately initiate packet retransmission upon detecting packet loss (i.e., receiving three consecutive duplicate acknowledgment packets), but initiates the packet retransmission only after determining that the deceleration condition is met. This is because when the computer device 104 detects packet loss, its buffer may still have available storage space. Therefore, the upload speed test method of the present invention continues to send packets at the current sending rate V for a certain period of time after detecting packet loss (i.e., receiving three consecutive duplicate acknowledgment packets). If packet loss still occurs between the computer device (e.g., ONU) 102 and the computer device (e.g., HTTP server) 104 during this period (e.g., one portion of packets are successfully received by the receiving end, while another portion of packets are not successfully received by the receiving end), the upload speed test method of the present invention can subsequently use a batch packet retransmission to effectively reduce the impact of packet retransmission on upload speed test.

The upload speed test method of the present invention checks whether the cumulative time of packet transmission at the current sending rate V has reached a predetermined threshold V2 (e.g., V2 = 2*RTT). Assuming that the most recent rate adjustment time is rate_adjust_tick, the computer device 102 begins transmitting packets at the current sending rate V, starting from the time point rate_adjust_tick. Therefore, in step S210, the processor 114 calculates the cumulative time time_cur-rate_adjust_tick for packet transmission at the current sending rate V according to the current time time_cur and the rate adjustment time rate_adjust_tick, and determines whether the cumulative time time_cur-rate_adjust_tick has reached the predetermined threshold V2 (i.e., the deceleration condition is **time_cur - rate_adjust_tick > V2**). If the cumulative time time_cur-rate_adjust_tick for packet transmission at the current sending rate V has reached the predetermined threshold V2, the processor 114 may decrease the sending rate to mitigate (or avoid) packet loss in subsequent packet transmissions. Therefore, in step S212, the processor 114 updates the current sending rate V to a smaller value and updates the sequence number seq_next of the next packet to be transmitted to the sequence number drop_seq of the lost packet that is recorded in step S314 (i.e., seq_next = drop_seq). Therefore, subsequent packet transmission will begin from the sequence number drop_seq of the lost packet. If there are multiple packet losses occurring within the same cumulative time time_cur-rate_adjust_tick, subsequent packet transmission will perform a batch packet retransmission to improve retransmission efficiency. Additionally, if the last lost packet in the previous cumulative time period time_cur-rate_adjust_tick was not the last transmitted packet (i.e., one or more packets will be successfully received by the receiver after the last lost packet), after the computer device 104 successfully receives the last lost packet that occurred during the previous cumulative time period time_cur-rate_adjust_tick, it can set the ACK number according to the last successfully received packet during the previous cumulative time period time_cur-rate_adjust_tick and return an acknowledgment packet to the computer device 102. In this way, the upload speed test method proposed by the present invention can significantly reduce the impact of packet loss on performance of the network speed test.

In step S218, the processor 114 calculates the packet count len of packets to be transmitted within one timing period (e.g., 1 ms) of the timer send_timer according to the current sending rate V (which may be unchanged (if neither the acceleration condition nor deceleration condition is met), a decreased sending rate (if the deceleration condition is met), or an increased sending rate (if the acceleration condition is met)), and instructs the network interface circuit 116 to transmit multiple packets (with a packet count of len) starting from the sequence number seq_next of the next packet. In step S220, the processor 114 updates the number of packets already transmitted at the current sending rate send_ri_len and the sequence number seq_next of the next packet according to the packet count len. In step S222, since the number of packets required to be transmitted during the upload speed test does not reach the predetermined number yet, the processor 114 restarts the timer send_timer, such that the timing when it is necessary to determine whether the current sending rate V needs to be adjusted (e.g., increased or decreased) can be determined by the timer send_timer. The timer send_timer repeatedly restarts until the required number of packets to be transmitted during the upload speed test has reached the predetermined number.

As mentioned above, during each timing period of the timer send_timer, the processor 114 of the computer device (e.g., ONU) 102 instructs the network interface circuit 116 to continuously transmit multiple packets (with a packet count of len) to the computer device (e.g., HTTP server) 104 at a fixed sending rate (i.e., current sending rate V). Additionally, whenever the timer send_timer completes counting of one timing period (e.g., 1 ms), the processor 114 performs one determination of whether the current sending rate V needs to be adjusted. Through dynamic adjustment of the sending rate, the sending rate can be increased or decreased in a stepwise manner, thus ultimately converging to the maximum sending rate that incurs no packet loss. The final sending rate can be used as the upload speed test result. In other words, the upload speed test method of the present invention does not require sampling of the sending rate during the upload speed test process. Instead, it dynamically adjusts the sending rate to gradually converge to the maximum rate that incurs no packet loss, thereby making the upload speed test result more closely approximate the network's maximum bandwidth.

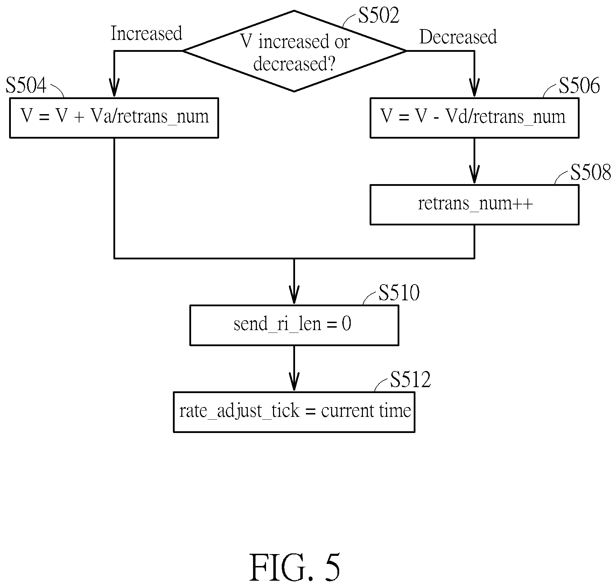

To make the sending rate gradually converge to the maximum sending rate that incurs no packet loss, the upload speed test method of the present invention gradually reduces the rate adjustment amount according to a packet retransmission count (i.e., the number of times of performing packet retransmission) during the upload speed test process. FIG. 5 is a flowchart of a sending rate adjustment method according to an embodiment of the present invention. Provided that the result is substantially the same, the steps are not required to be executed in the exact order shown in FIG. 5. In step S502, the processor 114 determines whether the current sending rate V should be increased or decreased. If the acceleration condition is met, meaning that the current sending rate V needs to be increased (step S214), the processor 114 performs step S504 to implement the sending rate adjustment operation (acceleration) in step S216. In step S504, the processor 114 adjusts a predetermined rate increment step size Va according to the packet retransmission count retrans_num, to determine the rate adjustment amount $\dfrac{Va}{retrans\_num}$, and uses the rate adjustment amount $\dfrac{Va}{retrans\_num}$ to increase the current sending rate V, thereby setting the adjusted sending rate (i.e., $V = V + \dfrac{Va}{retrans\_num}$). If the deceleration condition is met, meaning that the current sending rate V needs to be decreased (step S210), the processor 114 performs step S506 to implement the sending rate adjustment operation (deceleration) in step S212. In step S506, the processor 114 adjusts the predetermined rate decrement step size Vd according to the packet retransmission count retrans_num, to determine the rate adjustment amount $\dfrac{Vd}{retrans\_num}$, and uses the rate adjustment amount $\dfrac{Vd}{retrans\_num}$ to decrease the current sending rate V, thereby setting the adjusted sending rate (i.e., $V = V - \dfrac{Vd}{retrans\_num}$). Additionally, since packet retransmission occurs after the deceleration condition is met, the processor 114 updates the current packet retransmission count retrans_num (step S508). In addition, since the processor 114 has adjusted the sending rate (i.e., the current sending rate V is now different from the previously used sending rate), the processor 114 resets the number of packets transmitted at the current sending rate V (i.e., send_ri_len) to 0 (step S510), and sets the current time as the rate adjustment time rate_adjust_tick (step S512).

In summary, the upload speed test method of the present invention continuously transmits packets at a fixed rate. When the network is predicted to be uncongested, the sending rate is increased to reduce the impact of network latency on the upload speed test performance. Additionally, if packet loss occurs, the upload speed test method of the present invention does not immediately retransmit a single lost packet. Instead, it continues to send packets at the current sending rate for a period of time before performing a batch retransmission, thereby improving packet retransmission efficiency and reducing the impact of packet loss on upload speed test performance. Furthermore, during the upload speed test process, the upload speed test method of the present invention does not require sampling of the sending rate. Instead, it dynamically adjusts the sending rate to gradually converge to the maximum rate under a condition of no packet loss, thereby making the final upload speed test result more closely approximate the network's maximum bandwidth.

Those skilled in the art will readily observe that numerous modifications and alterations of the device and method may be made while retaining the teachings of the invention. Accordingly, the above disclosure should be construed as limited only by the metes and bounds of the appended claims.

**Claims**

1. An upload speed test method comprising:

   during an upload speed test process, repeatedly checking (S204, S206, S222) whether at least one sending rate adjustment condition (S208, S210, S214) is met; and
   whenever it is determined that the at least one sending rate adjustment condition (S208, S210, S214) is met, adjusting a current sending rate to set an adjusted sending rate (S212, S216), and using the adjusted sending rate to transmit packets to a server (S218).

2. An upload speed test device (102) comprising:

   a network interface circuit (116), arranged to transmit packets to a server for upload speed test;
   a storage device (112), arranged to store a program code; and
   a processor (114), arranged to load and execute the program code to perform following operations:

      during an upload speed test process, repeatedly checking whether at least one sending rate adjustment condition is met; and
      whenever it is determined that the at least one sending rate adjustment condition is met, adjusting a current sending rate to set an adjusted sending rate, and instruct the network interface circuit to use the adjusted sending rate to transmit packets to the server.

3. The upload speed test method of claim 1 or the upload speed test device of claim 2, wherein repeatedly checking whether the at least one sending rate adjustment condition is met comprises:

   checking whether a timer expires (S206); and
   whenever it is determined that the timer expires, checking if the at least one sending rate adjustment condition (S208, S210, S214) is met.

4. The upload speed test method of claim 3, wherein during each timing period of the timer, the upload speed test method uses a fixed sending rate to transmit packets to the server; or
   the upload speed test device (102) of claim 3, wherein during each timing period of the timer, the network interface circuit (116) uses a fixed sending rate to transmit packets to the server.

5. The upload speed test method of any one of claims 1, 3 and 4, or the upload speed test device of any one of claims 2 to 4, wherein the at least one sending rate adjustment condition comprises an acceleration condition, and repeatedly checking whether the at least one sending rate adjustment condition is met comprises:

   determining whether packet loss has been detected (S208); and
   in response to determining that the packet loss is not detected yet, checking whether the acceleration condition is met (S214).

6. The upload speed test method or the upload speed test device of claim 5, wherein checking whether the acceleration condition is met (S214) comprises:
   determining whether a ratio of a number of packets unacknowledged

      by the server to a number of packets already transmitted at the current sending rate is below a predetermined threshold; and in response to determining that the ratio is below the predetermined threshold, determining that the acceleration condition is met.

7. The upload speed test method or the upload speed test device of claim 5 or 6, wherein adjusting the current sending rate to set the adjusted sending rate (S216) comprises:

      adjusting a predetermined rate increment step size according to a packet retransmission count, to determine a rate adjustment amount; and
      using the rate adjustment amount to increase the current sending rate, to set the adjusted sending rate.

8. The upload speed test method of any one of claims 1 and 3 to 7, or the upload speed test device of any one of claims 2 to 7, wherein the at least one sending rate adjustment condition comprises a deceleration condition, and repeatedly checking whether the at least one sending rate adjustment condition is met comprises:

> determining whether packet loss has been detected (S208); and
> in response to determining that the packet loss has been detected, checking whether the deceleration condition is met (S210).

9. The upload speed test method or the upload speed test device of claim 8, wherein checking whether the deceleration condition is met (S210) comprises: determining whether a cumulative time of transmitting packets at

> the current sending rate reaches a predetermined threshold; and in response to determining that the cumulative time has reached
> the predetermined threshold, determining that the deceleration condition is met.

10. The upload speed test method or the upload speed test device of claim 8 or 9, wherein adjusting the current sending rate to set the adjusted sending rate (S212) comprises:

> adjusting a predetermined rate decrement step size according to a packet retransmission count, to determine a rate adjustment amount; and using the rate adjustment amount to decrease the current sending rate, to set the adjusted sending rate.

11. The upload speed test method of any one of claims 8 to 10, wherein the upload speed test method does not immediately initiate packet retransmission upon detecting packet loss, but initiates the packet retransmission only after determining that the deceleration condition is met; or

> the upload speed test device (102) of any one of claims 8 to 10,
> wherein the upload speed test device (102) does not immediately initiate packet retransmission upon detecting packet loss, but initiates the packet retransmission only after determining that the deceleration condition is met.

FIG. 1

EP 4 704 393 A1

**S202** Calculate packet count len of packets to be transmitted within counting period of send_timer according to V=V0, and transmit multiple packets (with packet count of len) starting from seq_next

**S204** Start send_timer

**S206** send_timer expires ? — No

Yes

**S208** Packet loss? — Yes / No

**S210** Deceleration condition met ? — No

Yes

**S214** Acceleration condition met? — No

Yes

**S212** Decrease V & seq_next = drop_seq

**S216** Increase V

**S218** Calculate packet count len of packets to be transmitted within counting period of send_timer according to V, and transmit multiple packets (with packet count of len) starting from seq_next

**S220** send_ri_len += len & seq_next += len

**S222** Restart send_timer

FIG. 2

S302

Receive ACK packet

S304

No          ack_num =          Yes
         last_ack_num?

S306
dup_ack_num = 1

S308
last_ack_num = ack_num

S310
dup_ack_num++

S312                     No
dup_ack_num >= 3?

Yes

S314
drop_seq = ack_num

FIG. 3

send_ri_len

SEQ=Y-1   SEQ=Y          SEQ=X-1  SEQ=X

| PKT | | PKT | ··· | PKT | | PKT | ··· | PKT | | PKT |

V ⟶

ACK_SEQ=Y

| ACK | | ACK | ··· | ACK |     | ACK | ··· | ACK |

X-Y

⟶ Time

t0                                                    t1

FIG. 4

EP 4 704 393 A1

12

S502

Increased — V increased or decreased? — Decreased

S504
V = V + Va/retrans_num

S506
V = V - Vd/retrans_num

S508
retrans_num++

S510
send_ri_len = 0

S512
rate_adjust_tick = current time

FIG. 5

## EUROPEAN SEARCH REPORT

**Application Number**

EP 25 19 6750

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CIAVATTONE AT&T LABS R GEIB DEUTSCHE TELEKOM L: "Test Protocol for One-way IP Capacity Measurement draft-ietf-ippm-capacity-protocol-07; draft-ietf-ippm-capacity-protocol-07.txt", TEST PROTOCOL FOR ONE-WAY IP CAPACITY MEASUREMENT DRAFT-IETF-IPPM-CAPACITY-PROTOCOL-07; DRAFT-IETF-IPPM-CAPACITY-PROTOCOL-07.TXT; IPPM, INTERNET ENGINEERING TASK FORCE, IETF; STANDARDWORKINGDRAFT, INT , no. 7 21 February 2024 (2024-02-21), pages 1-56, XP015165191, Retrieved from the Internet: URL:https://tools.ietf.org/html/draft-ietf -ippm-capacity-protocol-07 [retrieved on 2024-02-21] * the whole document * ----- | 1-11 | INV. H04L43/0894 H04L43/16 H04L43/50 H04L47/10 |
| X | EP 1 393 508 B1 (BYTEMOBILE INC [US]) 30 August 2006 (2006-08-30) * the whole document * ----- | 1-11 | **TECHNICAL FIELDS SEARCHED (IPC)** H04L |

The present search report has been drawn up for all claims

| Place of search | Date of completion of the search | Examiner |
|---|---|---|
| Munich | 19 December 2025 | García Bolós, Ruth |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 19 6750

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2025

| Patent document cited in search report | | Publication date | Patent family member(s) | | Publication date |
|---|---|---|---|---|---|
| EP 1393508 | B1 | 30-08-2006 | AT | E338407 T1 | 15-09-2006 |
| | | | EP | 1393508 A2 | 03-03-2004 |
| | | | US | 2002150048 A1 | 17-10-2002 |
| | | | WO | 02084960 A2 | 24-10-2002 |

EPO FORM P0459

For more details about this annex : see Official Journal of the European Patent Office, No. 12/82